# EUROPEAN PATENT APPLICATION

(11) **EP 4 507 211 A1**
(43) Date of publication of application: **12.02.2025**
(21) Application number: 24190782.3
(22) Date of filing: 25.07.2024
(51) Int. Cl.: H04B 7/06

(54) **METHODS FOR NW-SIDED MODEL DATA COLLECTION WITH LOW MEASUREMENT REPORTING OVERHEAD**

(30) Priority: 11.08.2023 US 202363532138 P
(71) Applicant: Nokia Solutions and Networks Oy, 02610 Espoo (FI); Nokia Technologies Oy, 02610 Espoo (FI)
(72) Inventor: REZAIE, Sajad, Aalborg (DK); AHMADIAN TEHRANI, Amir Mehdi, Munich (DE); LADDU, Keeth Saliya Jayasinghe, Espoo (FI)
(74) Representative: Nokia EPO representatives

(57) **Abstract**

A method for NW-sided model data collection with low measurement reporting overhead is provided which includes transmitting, to at least one user equipment, an indication of a measurement reporting scheme; transmitting, to the at least one user equipment, at least one reference signal on at least one first beam; receiving, from the at least one user equipment, a set of reference signal received power measurements of one or more of the at least one reference signal, according to the measurement reporting scheme; and providing the set of reference signal received power measurements to a machine learning model for prediction of best beams from a second set of beams.

## Description

### TECHNICAL FIELD

The example and non-limiting embodiments relate generally to beam management and, more particularly, to downlink beam prediction.

### BACKGROUND

It is known, in beam management, to use machine learning to predict beams.

### SUMMARY

The following summary is merely intended to be illustrative. The summary is not intended to limit the scope of the claims.

In accordance with one aspect, an apparatus comprising: at least one processor; and at least one memory storing instructions that, when executed by the at least one processor, cause the apparatus at least to: transmit, to at least one user equipment, an indication of a measurement reporting scheme; transmit, to the at least one user equipment, at least one reference signal on at least one first beam; receive, from the at least one user equipment, a set of reference signal received power measurements of one or more of the at least one reference signal, according to the measurement reporting scheme; and providing the set of reference signal received power measurements to a machine learning model for prediction of best beams from a second set of beams.

In accordance with one aspect, a method comprising: transmitting, with a network node to at least one user equipment, an indication of a measurement reporting scheme; transmitting, to the at least one user equipment, at least one reference signal on at least one first beam; receiving, from the at least one user equipment, a set of reference signal received power measurements of one or more of the at least one reference signal, according to the measurement reporting scheme; and providing the set of reference signal received power measurements to a machine learning model for prediction of best beams from a second set of beams.

In accordance with one aspect, an apparatus comprising means for: transmitting, to at least one user equipment, an indication of a measurement reporting scheme; transmitting, to the at least one user equipment, at least one reference signal on at least one first beam; receiving, from the at least one user equipment, a set of reference signal received power measurements of one or more of the at least one reference signal, according to the measurement reporting scheme; and providing the set of reference signal received power measurements to a machine learning model for prediction of best beams from a second set of beams.

In accordance with one aspect, a computer-readable medium comprising program instructions stored thereon for performing at least the following: causing transmitting, to at least one user equipment, of an indication of a measurement reporting scheme; causing transmitting, to the at least one user equipment, of at least one reference signal on at least one first beam; causing receiving, from the at least one user equipment, of a set of reference signal received power measurements of one or more of the at least one reference signal, according to the measurement reporting scheme; and causing providing of the set of reference signal received power measurements to a machine learning model for prediction of best beams from a second set of beams.

In accordance with one aspect, an apparatus comprising: at least one processor; and at least one memory storing instructions that, when executed by the at least one processor, cause the apparatus at least to: receive, from a network node, an indication of a measurement reporting scheme; measure at least one reference signal on at least one first beam; generate a set of reference signal received power measurements of one or more of the at least one reference signal based, at least partially, on the measurement reporting scheme; and transmit, to the network node, the set of reference signal received power measurements.

In accordance with one aspect, a method comprising: receiving, with a user equipment from a network node, an indication of a measurement reporting scheme; measuring at least one reference signal on at least one first beam; generating a set of reference signal received power measurements of one or more of the at least one reference signal based, at least partially, on the measurement reporting scheme; and transmitting, to the network node, the set of reference signal received power measurements.

In accordance with one aspect, an apparatus comprising means for: receiving, from a network node, an indication of a measurement reporting scheme; measuring at least one reference signal on at least one first beam; generating a set of reference signal received power measurements of one or more of the at least one reference signal based, at least partially, on the measurement reporting scheme; and transmitting, to the network node, the set of reference signal received power measurements.

In accordance with one aspect, a computer-readable medium comprising program instructions stored thereon for performing at least the following: causing receiving, from a network node, of an indication of a measurement reporting scheme; measuring at least one reference signal on at least one first beam; generating a set of reference signal received power measurements of one or more of the at least one reference signal based, at least partially, on the measurement reporting scheme; and causing transmitting, to the network node, of the set of reference signal received power measurements.

According to some aspects, there is provided the subject matter of the independent claims. Some further aspects are defined in the dependent claims.

### BRIEF DESCRIPTION OF THE DRAWINGS

The foregoing aspects and other features are explained in the following description, taken in connection with the accompanying drawings, wherein:
FIG. 1 is a block diagram of one possible and non-limiting example system in which the example embodiments may be practiced;
FIG. 2 is a diagram illustrating features as described herein;
FIG. 3 is a diagram illustrating features as described herein;
FIG. 4 is a diagram illustrating features as described herein;
FIG. 5 is a diagram illustrating features as described herein;
FIG. 6 is a flowchart illustrating steps as described herein;
FIG. 7 is a diagram illustrating features as described herein;
FIG. 8 is a diagram illustrating features as described herein;
FIG. 9 is a diagram illustrating features as described herein;
FIG. 10 is a diagram illustrating features as described herein;
FIG. 11 is a flowchart illustrating steps as described herein; and
FIG 12 is a flowchart illustrating steps as described herein.

### DETAILED DESCRIPTION OF EMBODIMENTS

The following abbreviations that may be found in the specification and/or the drawing figures are defined as follows:
- 3GPP: third generation partnership project
- 5G: fifth generation
- SGC: 5G core network
- Al: artificial intelligence
- AMF: access and mobility management function
- BM: beam management
- BP: beam pair
- cRAN: cloud radio access network
- CRI: channel state information reference signal resource indicator
- CSI: channel state information
- CU: central unit
- DL: downlink
- DU: distributed unit
- eNB (or eNodeB): evolved Node B (e.g., an LTE base station)
- EN-DC: E-UTRA-NR dual connectivity
- en-gNB or En-gNB: node providing NR user plane and control plane protocol terminations towards the UE, and acting as secondary node in EN-DC
- E-UTRA: evolved universal terrestrial radio access, i.e., the LTE radio access technology
- gNB (or gNodeB): base station for 5G/NR, i.e., a node providing NR user plane and control plane protocol terminations towards the UE, and connected via the NG interface to the SGC
- I/F: interface
- L1: layer 1
- LTE: long term evolution
- MAC: medium access control
- MIMO: multiple input multiple output
- ML: machine learning
- MME: mobility management entity
- MRS: measurement reporting scheme
- ng or NG: new generation
- ng-eNB or NG-eNB: new generation eNB
- NLOS: non-line of sight
- NR: new radio
- N/W or NW: network
- O-RAN: open radio access network
- PDCP: packet data convergence protocol
- PHY: physical layer
- QCL: quasi co-location
- RAN: radio access network
- RF: radio frequency
- RLC: radio link control
- RRC: radio resource control
- RRH: remote radio head
- RS: reference signal
- RSRP: reference signal received power
- RU: radio unit
- Rx: receiver
- SDAP: service data adaptation protocol
- SGW: serving gateway
- SMF: session management function
- SNR: signal to noise ratio
- SSB: synchronization signal block
- TCI: transmission configuration indicator
- TH: threshold
- TRP: transmission and reception point
- Tx: transmitter
- UCI: uplink channel information
- UE: user equipment (e.g., a wireless, typically mobile device)
- UL: uplink
- UPF: user plane function
- VNR: virtualized network function

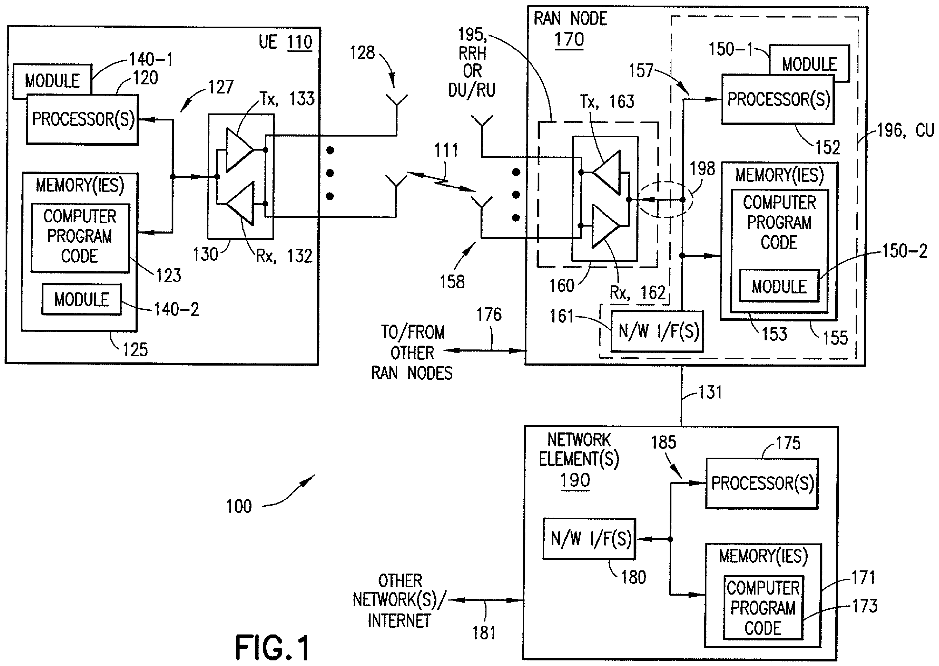

Turning to FIG. 1, this figure shows a block diagram of one possible and non-limiting example in which the examples may be practiced. A user equipment (UE) 110, radio access network (RAN) node 170, and network element(s) 190 are illustrated. In the example of FIG. 1, the user equipment (UE) 110 is in wireless communication with a wireless network 100. A UE is a wireless device that can access the wireless network 100. The UE 110 includes one or more processors 120, one or more memories 125, and one or more transceivers 130 interconnected through one or more buses 127. Each of the one or more transceivers 130 includes a receiver, Rx, 132 and a transmitter, Tx, 133. The one or more buses 127 may be address, data, or control buses, and may include any interconnection mechanism, such as a series of lines on a motherboard or integrated circuit, fiber optics or other optical communication equipment, and the like. A "circuit" may include dedicated hardware or hardware in association with software executable thereon. The one or more transceivers 130 are connected to one or more antennas 128. The one or more memories 125 include computer program code 123. The UE 110 includes a module 140, comprising one of or both parts 140-1 and/or 140-2, which may be implemented in a number of ways. The module 140 may be implemented in hardware as module 140-1, such as being implemented as part of the one or more processors 120. The module 140-1 may be implemented also as an integrated circuit or through other hardware such as a programmable gate array. In another example, the module 140 may be implemented as module 140-2, which is implemented as computer program code 123 and is executed by the one or more processors 120. For instance, the one or more memories 125 and the computer program code 123 may be configured to, with the one or more processors 120, cause the user equipment 110 to perform one or more of the operations as described herein. The UE 110 communicates with RAN node 170 via a wireless link 111.

The RAN node 170 in this example is a base station that provides access by wireless devices such as the UE 110 to the wireless network 100. The RAN node 170 may be, for example, a base station for 5G, also called New Radio (NR). In 5G, the RAN node 170 may be a NG-RAN node, which is defined as either a gNB or a ng-eNB. A gNB is a node providing NR user plane and control plane protocol terminations towards the UE, and connected via the NG interface to a 5GC (such as, for example, the network element (s) 190). The ng-eNB is a node providing E-UTRA user plane and control plane protocol terminations towards the UE, and connected via the NG interface to the 5GC. The NG-RAN node may include multiple gNBs, which may also include a central unit (CU) (gNB-CU) 196 and distributed unit(s) (DUs) (gNB-DUs), of which DU 195 is shown. Note that the DU may include or be coupled to and control a radio unit (RU). The gNB-CU is a logical node hosting RRC, SDAP and PDCP protocols of the gNB or RRC and PDCP protocols of the en-gNB that controls the operation of one or more gNB-DUs. The gNB-CU terminates the F1 interface connected with the gNB-DU. The F1 interface is illustrated as reference 198, although reference 198 also illustrates a link between remote elements of the RAN node 170 and centralized elements of the RAN node 170, such as between the gNB-CU 196 and the gNB-DU 195. The gNB-DU is a logical node hosting RLC, MAC and PHY layers of the gNB or en-gNB, and its operation is partly controlled by gNB-CU. One gNB-CU supports one or multiple cells. One cell is supported by only one gNB-DU. The gNB-DU terminates the F1 interface 198 connected with the gNB-CU. Note that the DU 195 is considered to include the transceiver 160, e.g., as part of a RU, but some examples of this may have the transceiver 160 as part of a separate RU, e.g., under control of and connected to the DU 195. The RAN node 170 may also be an eNB (evolved NodeB) base station, for LTE (long term evolution), or any other suitable base station, access point, access node, or node.

The RAN node 170 includes one or more processors 152, one or more memories 155, one or more network interfaces (N/W I/F(s)) 161, and one or more transceivers 160 interconnected through one or more buses 157. Each of the one or more transceivers 160 includes a receiver, Rx, 162 and a transmitter, Tx, 163. The one or more transceivers 160 are connected to one or more antennas 158. The one or more memories 155 include computer program code 153. The CU 196 may include the processor(s) 152, memories 155, and network interfaces 161. Note that the DU 195 may also contain its own memory/memories and processor(s), and/or other hardware, but these are not shown.

The RAN node 170 includes a module 150, comprising one of or both parts 150-1 and/or 150-2, which may be implemented in a number of ways. The module 150 may be implemented in hardware as module 150-1, such as being implemented as part of the one or more processors 152. The module 150-1 may be implemented also as an integrated circuit or through other hardware such as a programmable gate array. In another example, the module 150 may be implemented as module 150-2, which is implemented as computer program code 153 and is executed by the one or more processors 152. For instance, the one or more memories 155 and the computer program code 153 are configured to, with the one or more processors 152, cause the RAN node 170 to perform one or more of the operations as described herein. Note that the functionality of the module 150 may be distributed, such as being distributed between the DU 195 and the CU 196, or be implemented solely in the DU 195.

The one or more network interfaces 161 communicate over a network such as via the links 176 and 131. Two or more gNBs 170 may communicate using, e.g., link 176. The link 176 may be wired or wireless or both and may implement, for example, an Xn interface for 5G, an X2 interface for LTE, or other suitable interface for other standards.

The one or more buses 157 may be address, data, or control buses, and may include any interconnection mechanism, such as a series of lines on a motherboard or integrated circuit, fiber optics or other optical communication equipment, wireless channels, and the like. For example, the one or more transceivers 160 may be implemented as a remote radio head (RRH) 195 for LTE or a distributed unit (DU) 195 for gNB implementation for 5G, with the other elements of the RAN node 170 possibly being physically in a different location from the RRH/DU, and the one or more buses 157 could be implemented in part as, for example, fiber optic cable or other suitable network connection to connect the other elements (e.g., a central unit (CU), gNB-CU) of the RAN node 170 to the RRH/DU 195. Reference 198 also indicates those suitable network link(s).

It is noted that description herein indicates that "cells" perform functions, but it should be clear that equipment which forms the cell will perform the functions. The cell makes up part of a base station. That is, there can be multiple cells per base station. For example, there could be three cells for a single carrier frequency and associated bandwidth, each cell covering one-third of a 360 degree area so that the single base station's coverage area covers an approximate oval or circle. Furthermore, each cell can correspond to a single carrier and a base station may use multiple carriers. So if there are three 120 degree cells per carrier and two carriers, then the base station has a total of 6 cells.

The wireless network 100 may include a network element or elements 190 that may include core network functionality, and which provides connectivity via a link or links 181 with a further network, such as a telephone network and/or a data communications network (e.g., the Internet). Such core network functionality for 5G may include access and mobility management function(s) (AMF(s)) and/or user plane functions (UPF(s)) and/or session management function(s) (SMF(s)). Such core network functionality for LTE may include MME (Mobility Management Entity)/SGW (Serving Gateway) functionality. These are merely illustrative functions that may be supported by the network element (s) 190, and note that both 5G and LTE functions might be supported. The RAN node 170 is coupled via a link 131 to a network element 190. The link 131 may be implemented as, e.g., an NG interface for 5G, or an S1 interface for LTE, or other suitable interface for other standards. The network element 190 includes one or more processors 175, one or more memories 171, and one or more network interfaces (N/W I/F(s)) 180, interconnected through one or more buses 185. The one or more memories 171 include computer program code 173. The one or more memories 171 and the computer program code 173 are configured to, with the one or more processors 175, cause the network element 190 to perform one or more operations.

The wireless network 100 may implement network virtualization, which is the process of combining hardware and software network resources and network functionality into a single, software-based administrative entity, a virtual network. Network virtualization involves platform virtualization, often combined with resource virtualization. Network virtualization is categorized as either external, combining many networks, or parts of networks, into a virtual unit, or internal, providing network-like functionality to software containers on a single system. For example, a network may be deployed in a tele cloud, with virtualized network functions (VNF) running on, for example, data center servers. For example, network core functions and/or radio access network(s) (e.g. CloudRAN, O-RAN, edge cloud) may be virtualized. Note that the virtualized entities that result from the network virtualization are still implemented, at some level, using hardware such as processors 152 or 175 and memories 155 and 171, and also such virtualized entities create technical effects.

It may also be noted that operations of example embodiments of the present disclosure may be carried out by a plurality of cooperating devices (e.g. cRAN).

The computer readable memories 125, 155, and 171 may be of any type suitable to the local technical environment and may be implemented using any suitable data storage technology, such as semiconductor based memory devices, flash memory, magnetic memory devices and systems, optical memory devices and systems, fixed memory and removable memory. The computer readable memories 125, 155, and 171 may be means for performing storage functions. The processors 120, 152, and 175 may be of any type suitable to the local technical environment, and may include one or more of general purpose computers, special purpose computers, microprocessors, digital signal processors (DSPs) and processors based on a multi-core processor architecture, as non-limiting examples. The processors 120, 152, and 175 may be means for performing functions, such as controlling the UE 110, RAN node 170, and other functions as described herein.

In general, the various example embodiments of the user equipment 110 can include, but are not limited to, cellular telephones such as smart phones, tablets, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, tablets with wireless communication capabilities, as well as portable units or terminals that incorporate combinations of such functions.

Having thus introduced one suitable but non-limiting technical context for the practice of the example embodiments of the present disclosure, example embodiments will now be described with greater specificity.

Features as described herein may generally relate to beamforming. Starting from Rel-15, 3GPP has standardized a set of operations for supporting beamforming transmission, including beam sweeping, beam measurements and reporting, beam maintenance and recovery, etc. All these aspects are detailed in the standard under the broad topic of beam management procedures. Beam management has evolved in Rel-16 and successively in Rel-17 to support more advanced configurations, such as multi beams reporting to enable multi-TRPs and multi-panel configurations. However, the fundamental problem of the beam management procedures is that, with a larger number of beams supported by high-dimensional MIMO arrays, the CSI-RS measurements and feedback overhead radically increase to enable beam selection. In addition, the time required for the gNB and UE to complete the beam sweeping and establish the best beam increases accordingly. This may limit the support of low latency communication. This is mainly due to the frequency of SSB/CSI-RS transmission during procedures P1, P2, P3 that are described in 3GPP TR 38.802 and summarized as follows:
1. P1 provides beam sweeping implemented for the gNB to scan the coverage area, periodically transmitting SSBs with wide angular beams. Conversely, the UE scans different SSBs to identify the best beam and corresponding time/frequency resources on which it is requesting access.
2. During P2, the gNB performs beam refinement, transmitting CSI-RSs with narrow beams to identify a more precise direction towards the UE after establishing the wide beam in P1.
3. During P3, beam refinement is implemented at the UE side to scan a set of Rx narrow beams, while the gNB transmits CSI-RSs using the best beam identified in P2.

The procedures P1, P2 and P3, are executed sequentially to establish the data transmission between gNB and UE, and in case of beam failure and recovery are fully repeated. In addition, P2 and P3 are also periodically repeated for beam maintenance.

Features as described herein may generally relate to beam management with AI/ML. The Rel-18 study on Artificial Intelligence (AI)/Machine Learning (ML) for NR Air Interface, agreed in RANI [RP-213599], includes the following use case:
"...Study the 3GPP framework for AI/ML for air-interface corresponding to each target use case regarding aspects such as performance, complexity, and potential specification impact.
Use cases to focus on:
   Initial set of use cases includes:
      CSI feedback enhancement, e.g., overhead reduction, improved accuracy, prediction [RAN1] Beam management, e.g., beam prediction in time, and/or spatial domain for overhead and latency reduction, beam selection accuracy improvement [RAN1]
      Positioning accuracy enhancements for different scenarios including, e.g., those with heavy NLOS conditions [RAN1]
   Finalize representative sub use cases for each use case for characterization and baseline performance evaluations by RAN#98
      The AI/ML approaches for the selected sub use cases need to be diverse enough to support various requirements on the gNB-UE collaboration levels
Note: the selection of use cases for this study solely targets the formulation of a framework to apply AI/ML to the air-interface for these and other use cases. The selection itself does not intend to provide any indication of the prospects of any future normative project..."

The primary motivation for supporting AI/ML-based beam management in the standard is overhead savings and latency reduction. It has been shown that ML algorithms enable predicting the serving beam for different UE locations and time instances, thus avoiding measuring the actual beam quality and saving those resources to be employed for data transmission. On the other hand, beam scanning operations like those performed in P1, P2 and P3 are time inefficient and not scalable when the size of antenna arrays increases. Therefore, ML algorithms may replace sequential beam scanning by recommending a reduced set of beams likely to contain the best beam index of the full scan.

Features as described herein may generally relate to 3GPP Rel-18 and beyond AI/ML beam management.

For example, features as described herein may generally relate to beam prediction sub-use cases. The following has been agreed in RAN1#109-e on beam management sub-use cases for AI/ML air interface:
"...Agreement
For AI/ML-based beam management, support BM-Case1 and BM-Case2 for characterization and baseline performance evaluations
   BM-Case1: Spatial-domain DL beam prediction for Set A of beams based on measurement results of Set B of beams
   BM-Case2: Temporal DL beam prediction for Set A of beams based on the historic measurement results of Set B of beams
   FFS: details of BM-Case1 and BM-Case2; FFS: other sub use cases
Note: For BM-Case1 and BM-Case2, Beams in Set A and Set B can be in the same Frequency Range..."

The use cases for AI/ML-based beam management indicated in RP-213599 are beam prediction in time and/or spatial domain and beam selection accuracy improvement. Beam prediction in time refers to the broad range of ML approaches that predict the next beam to use. Therefore, these works predict the best beam to use in successive time instances. Differently, spatial domain ML approaches infer the best beam in different spatial locations. Finally, the approaches considering improving beam selection accuracy look more to system performance aspects such as reliability and outage, targeting more specific applications.

For example, features as described herein may generally relate to alternative for beam prediction.

The following has been agreed in RAN1#110 on specifying BM-Case1 options for beam prediction:
"...Agreement
For the sub use case BM-Case1 and BM-Case2, further study the following alternatives for the predicted beams:
   Alt.1: DL Tx beam prediction
   Alt.2: DL Rx beam prediction
   Alt.3: Beam pair prediction (a beam pair consists of a DL Tx beam and a corresponding DL Rx beam)
   Note1: DL Rx beam prediction may or may not have spec impact..."

Features as described herein may generally relate to AI/ML spatial domain beam prediction sub-use cases (NW side training and Inference). For BM-Case1, measurement results of Set B of beams may be used to predict the best beam from Set A of beams. This procedure saves resources from both UE and NW, compared to the exhaustively measuring all the beams in Set A. There are two alternatives: Alt.1: Set B is a subset of Set A; Alt.2: Set A and Set B are different (e.g. Set A consists of narrow beams and Set B consists of wide beams).

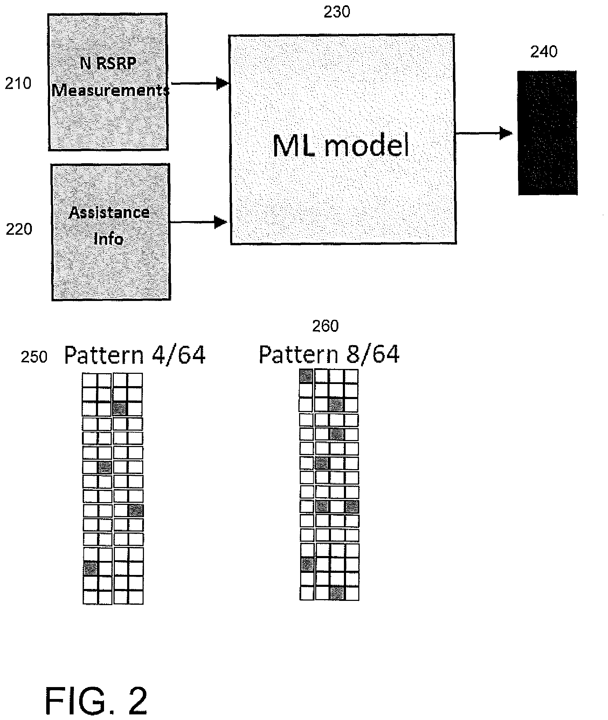

For BM-Case1, a sub-set of narrow beam measurements may be used to predict the best narrow beam at the UE side which leads to avoiding measuring all narrow beams. For example, in FIG. 2, the NW configures the UE to get the measurement report only from a subset of beams while excluding the other beams from the set of measurements, for example according to Pattern 4/64 (250) or Pattern 8/64 (260).

For example, if the NN beam prediction model is implemented at the NW side, instead of transmitting a large number of reference signals like SSBs and CSI-RSs, the UE measures the received signal(s) and reports measurements of only a few beams (of set B), and the ML model at the gNB computes the parameters like CRI and RSRP (210) to be used as input data of the ML model (230). In addition, assistance information (ASSTINFO) as proposed in the above conclusion (220), from the UE, can be added to the ML model input if available.

In this example, the NW or UE executes the ML model prediction locally and provides a list of CRI associated with K beams. The list contains both measured beams and predicted beams, which are ranked, for instance, in descending order from the most likely best beam to the less likely best beam. Finally, the list of ranked beams and available RSRP values are added to the beam reporting message (240) sent back to the UE or NW.

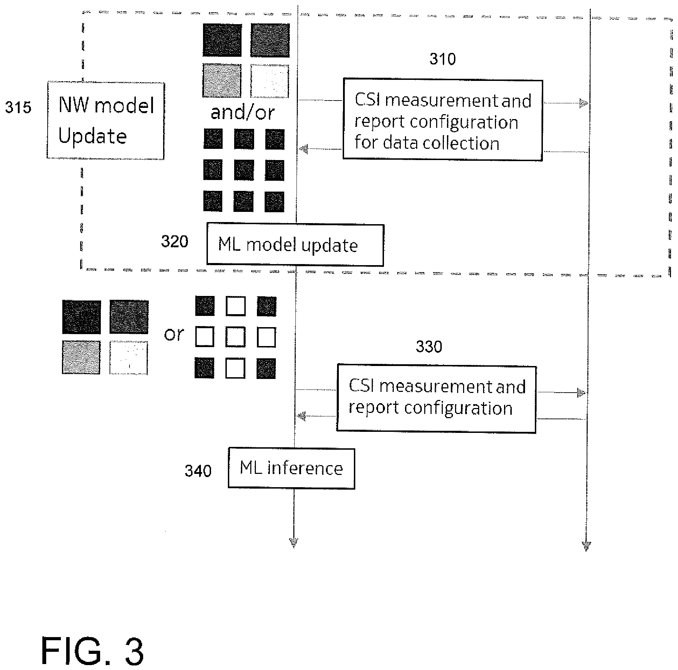

Referring now to FIG. 3, illustrated is a representation of NW training and inference for DL Tx spatial domain beam prediction. At 310, CSI measurement and report configuration for data collection may be performed, for example in response to a NW model update 315. At 320, a ML model update may be applied. At 330, CSI measurement and report configuration may be performed. At 340, ML inference may be made.

Features as described herein may generally relate to DL Tx-Rx beam pair in spatial domain beam prediction. Beam pair prediction, as one of the alternatives for spatial beam prediction, can be operated based on a relationship between Set B beams (set of measured beams to be used for ML model input) and Set A beams (set of beams which are predicted as output of ML model), for example: Alt.1: Set B is a subset of Set A; Alt.2: Set A and Set B are different (e.g. Set A consists of narrow beams and Set B consists of wide beams).

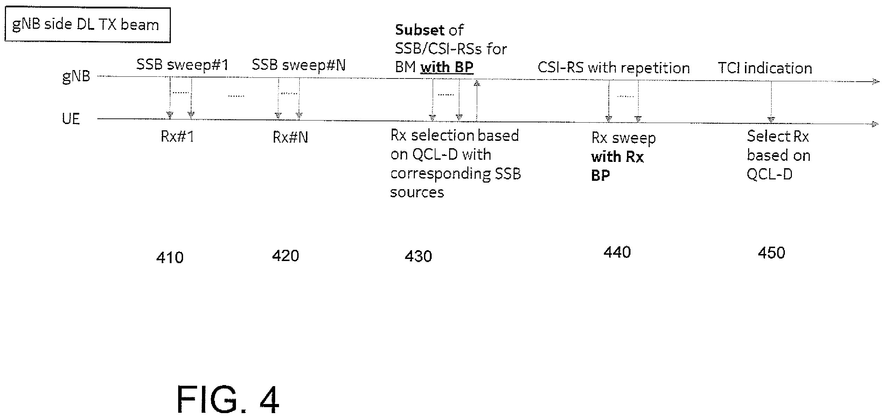

As an example, if the ML model is implemented at gNB and Set B is a subset of Set A, DL beam pair prediction between UE and gNB (known as Tx-Rx beam pair) can be done where subset (s) of SSB/CSI-RSs are predicted at the gNB, and Rx beam selection is followed based on QCL Type D with corresponding SSB resources. CSI-RS beam repetition at the gNB might be followed by Rx beam prediction at the UE, as at FIG. 4. FIG. 4 illustrates an example of DL Tx-Rx beam pair prediction using a ML model at gNB. At 410, the gNB may perform SSB sweep#1, which may be received at the UE at Rx#1. At 420, the gNB may perform SSB sweep#N, which may be received at the UE at Rx#N. At 430, the gNB may transmit a subset of SSB/CSI-RSs for BM with BP. The UE may perform Rx selection based on QCL-D with corresponding SSB resources. At 440, the gNB may transmit CSI-RS with repetition, and the UE may perform Rx sweep with Rx BP. At 450, the gNB may transmit a TCI indication, and the UE may select Rx based on QCL-D.

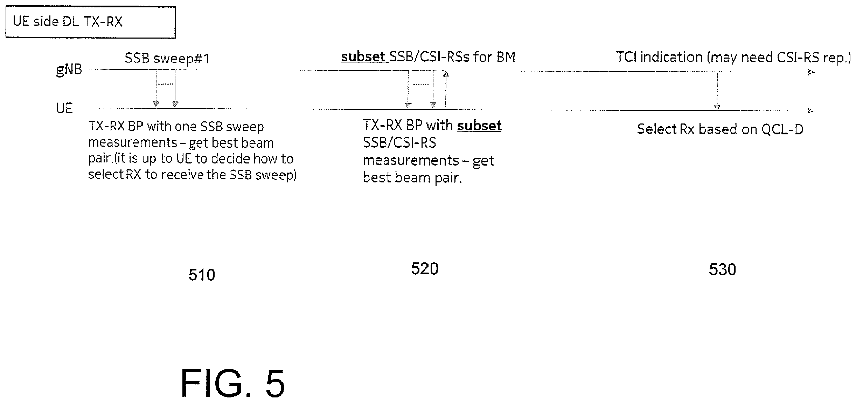

As another example, if the ML model is implemented at the UE and Set B is a subset of Set A, DL beam pair prediction between the UE and the gNB (known as Tx-Rx beam pair) can be done where subset(s) of SSB/CSI-RSs are measured via one SSB sweep at the UE, and Tx-Rx beam selection is performed to achieve the best Rx beam for the beam pair. Referring now to FIG. 5, illustrated in an example of DL Tx-Rx beam pair prediction using a ML model at the UE. At 510, the gNB may perform SSB sweep#1, and the UE may perform Tx-Rx BP with one SSB sweep measurement, for example to get the best beam pair. It may be up to the UE to decide how to select RX to receive the SSB sweep. At 520, the gNB may transmit a subset of SSB/CSI-RSs for BM, and the UE may perform TX-RX BP with the subset of SSB/CSI-RS measurements, and may determine a best beam pair. At 530, the gNB may transmit a TCI indication (which may need CSI-RS rep.), and the UE may select Rx based on QCL-D.

The following agreement in RAN1-#111 regarding the potential specification impact on the UE measurement reporting enhancements for NW-side inference with BM-case 1 and BM-case 2, which mentions the importance of payload overhead for sharing the L1-RSRP while running ML model at network side, was proposed:
"...Agreement
For BM-Case1 and BM-Case2 with a network-side AI/ML model, study potential specification impact on the following L1 reporting enhancement for AI/ML model inference
   UE to report the measurement results of more than 4 beams in one reporting instance
   Other L1 reporting enhancements can be considered..."

The following agreement was made during RAN1-#113 regarding data collection for NW side model:
"...Agreement
Regarding data collection for NW-side AI/ML model, study necessity, benefits and beam-management-specific potential specification impact from RAN1 point of view on the following additional aspects
   Mechanism related to the reporting
   Additional information for content of the reporting
   FFS: Information associated with or configured for the reported data samples, e.g., timestamps, SNR, data quality, etc.
   Reporting overhead reduction
   Note1: non-3GPP based solution is a separate issue.
   Note2: The framework corresponding to higher layer(s) are up to the associated WG(s)
   Note 3: Overhead, UE complexity and power consumption should be considered..."

Two main aspects in NW sided model data collection are mechanisms related to reporting, and reduced overhead reporting from UE to NW. Example embodiments of the present disclosure may relate to these aspects.

The following observation from RAN1-#113 (AI 9.2.3.1) highlights that L1-RSRP quantization granularity of legacy reporting reduces the L1-RSRP sharing overhead while not degrading the performance significantly:
"...Observation
At least for BM-Case1 for inference of DL Tx beam with L1-RSRPs of all beams in Set B, existing quantization granularity of L1-RSRP (i.e., 1dB for the best beam, 2dB for the difference to the best beam) causes [a minor loss] in beam prediction accuracy compared to unquantized L1-RSRPs of beams in Set B:
   Evaluation results from [11 sources: Interdigital, vivo, Huawei/HiSi, CATT, Fujitsu, Lenovo, Apple, Qualcomm, Samsung, DoCoMo, Ericsson] show [less than 5%] loss in terms of Top-1 beam prediction accuracy..."

These observations indicate that ML models are capable of predicting the optimal communication beam, even with limited information. However, to the best of authors knowledge, methods on reducing the reported quantized RSRP targeting at new mechanisms for measurement reporting and reducing overhead (on top of quantization) at the same time have not been investigated.

As Set A and Set B are gNB specific and depend on the gNB codebook, it is reasonable to have the ML model running at the gNB for DL Tx beam prediction or DL Tx-RX beam pair prediction. However, both prediction schemes require measured RSRP at the UE to be shared with the gNB, which may introduce high overhead to the network (proportional to the Set B cardinality). To reduce the overhead, quantizing the measured RSRPs is a known method at the UE, as quantization helps to reduce the overhead significantly. However, most of the measured/quantized RSRPs are very low (close to the noise level). The following question arises: how can the overhead of sharing the measured/quantized RSRPs with gNB be reduced? Answering this question facilitates ML-based beam prediction at the gNB with larger codebooks (larger Set B and Set A). In addition, potential solutions for feedback overhead reduction may result in reducing the size of data sets in data collection as well.

In an example embodiment, a method at the NW to compensate the impact of reduced measurement reporting targeting overhead reduction of the shared measured/quantized RSRPs from UE to the NW may be implemented. A technical effect of example embodiments of the present disclosure may be to facilitate NW sided model prediction performance. A technical effect of example embodiments of the present disclosure may be to provide Set B reporting overhead reduction via reducing the size of datasets in data collection.

Due to propagation properties in FR2, the channel between the gNB and the UE is sparse, including a few strong components. Therefore, a large portion of the RSRP measurements (using the beams in Set B) are significantly lower than the highest measured RSRP beams, and may be close to the noise level. As the beam prediction task is a classification problem, the selected beam from Set A does not depend strongly on the exact values of the RSRP of beams which have received low power.

In an example embodiment, only the most significant measured L1-RSRP values may be required at the NW. A technical effect of example embodiments of the present disclosure may be to reduce the feedback overhead from UE to NW.

In an example embodiment, the UE may only share a few quantized L1-RSRP values instead of sharing all the quantized L1-RSRP values. For example, NW may configure a measurement reporting scheme (MRS) for the UE. A technical effect of example embodiments of the present disclosure may be to further reduce the L1-RSRP sharing overhead (in addition to the quantization technique) .

An example of the MRS configured for the UE may be reporting only high RSRPs (H-RSRP). From the measured RSRPs with the beams in Set B, the UE may only report RSRPs that are above a preconfigured threshold (TH). In this case, the feedback may be variable and depend on the measurements at the UE.

In an example embodiment, for H-RSRP, based on the noise level, average received RSRPs by previous UEs, and other potential factors, the gNB may set a TH (e.g., in dB). Accordingly, the UE may use the received TH from the NW to filter out reporting the beams which have RSRPs smaller than the TH, i.e.,
*RSRPᵢ* > *TH* → Report beam *i*.

*S =* {(*beam ind*₀*, RSRP*₀)*,* {(*beam ind*₁, *RSRP*₁)*,* ... , {(*beam ind_{K}*, *RSRP_{K}*)} may be a list including the beam indices and corresponding RSRPs that passed the criteria and may be reported to the gNB. Note that |*S*| is not fixed for a preconfigured TH, as different number of beams may meet the criteria. Then, the UE may share the information in set S with the NW.

An example of the MRS configured for the UE may be reporting only N-best RSRPs (NB-RSRP). The UE may measure all the beams in Set B. Then, UE may select and report only the N-best beams with highest RSRPs. As N determines the number of beams to be reported, the feedback overhead size may be fixed and may not depend on the UE measurements.

In an example embodiment, for NB-RSRP, the NW may configure the UE to only report N beams with the highest RSRP values. So, in this case, the UE may sort the measured RSRPs with the beams in Set B in a descending order. Thus, list *S* may include the *N* first sorted beams and corresponding RSRPs. The reporting overhead may be fixed for a configured N.

An example of the MRS configured for the UE may be reporting the RSRPs that cover X% of the received power (XP-RSRP). After measuring the RSRPs with all the Set B beams, the UE may calculate the received power from all the beams, i.e., P_tot. Then, the UE may only report the M best beams that cover at least X% of P_tot. Therefore, the feedback overhead may vary in this case.

In an example embodiment, for XP-RSRP, the NW may ask the UE to share the best beams that their RSRPs covers, at least, X% of the received power by all the RSRPs, i.e., *Pₜₒₜ* = Σ*ᵢ* RSRP*ᵢ*. Thus, using a descending sort of the RSRP values, the UE may select the first K beams to make the list *S*, where Σ_{*i*∈}*_{S} RSRPᵢ* > X% *Pₜₒₜ.* As a result, the |*S*|, and consequently the reporting overhead, may change for a configured X.

As the NW may not receive reports for a portion of the beams in Set B, the NW may consider different pre-processing options to handle this problem (i.e. process the received incomplete report from the UE), for example interpolation or padding.

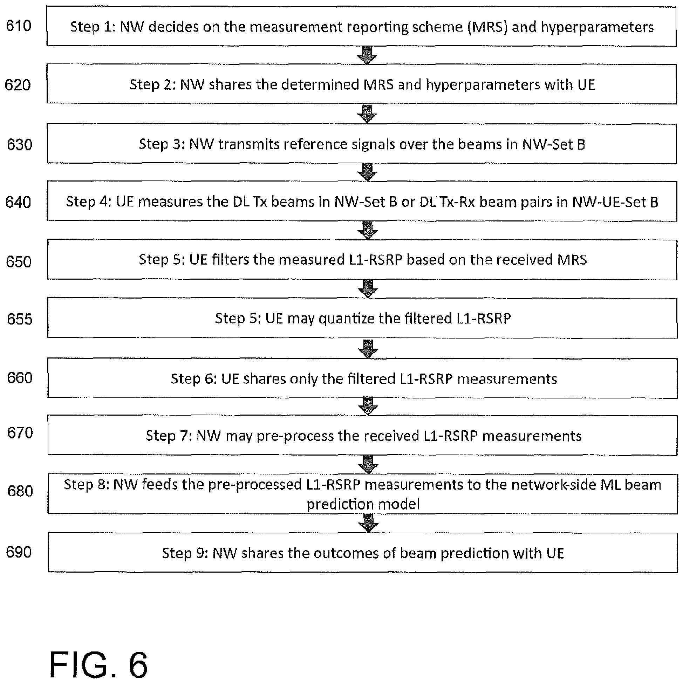

Depending on the selected preprocessing option in the training procedure of the NW-sided ML-based beam selection model, the NW may select and configure one of the MRSs. Referring now to FIG. 6, illustrated is an example of a L1-RSRP measurement filtering procedure. At 610, the NW may decide on the measurement reporting scheme (MRS) and hyperparameters. At 620, the NW may share the determined MRS and hyperparameters with the UE. At 630, the NW may transmit reference signals over the beams in NW-Set B. At 640, the UE may measure the DL Tx beams in NW-Set B or DL Tx-Rx beam pairs in NW-UE-Set B. At 650, the UE may filter the measured LW-RSRP based on the received MRS. At 655, the UE may quantize the filtered L1-RSRP. At 660, the UE may share only the filtered L1-RSRP measurements. At 670, the NW may pre-pr0cess the received L1-RSRP measurements. At 680, the NW may feed the pre-processed L1-RSRP measurements to the network-side ML beam prediction model. At 690, the NW may share the outcomes of beam prediction with the UE.

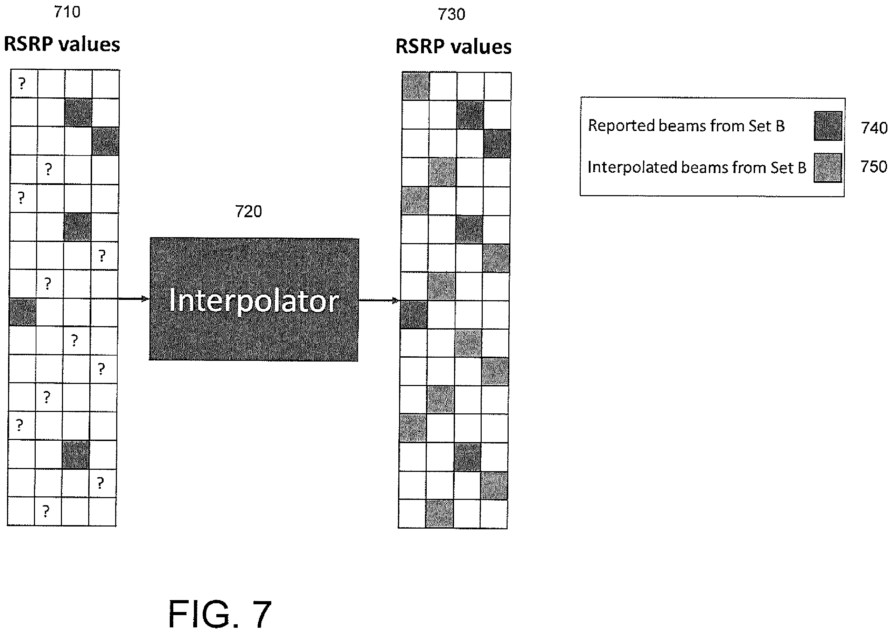

In an example embodiment, the NW may consider interpolation for processing the received incomplete report from the UE. The NW may first use an interpolation function f() to estimate the RSRP values for the missing beams. After placing the received and interpolated RSRPs into a matrix, it may be fed to the ML-based beam prediction model. Referring now to FIG. 7, illustrated is an example of the NW using an interpolation procedure to estimate the RSRP values of the unreported beams in Set B. In an example embodiment, an interpolation function f() (720) may be used to estimate the RSRP values for the missing beams in Set B. The set of RSRP values (710) input to the interpolator (720) may include reported beams (740); unreported beams are illustrated by question marks. The interpolator (720) may output a set of RSRP values (730) including both the reported beams from Set B (740) and interpolated beams from set B (750), which are located at the positions of the question marks. Then, the received and interpolated RSRPs of Set B may be fed to the ML-based beam prediction model.

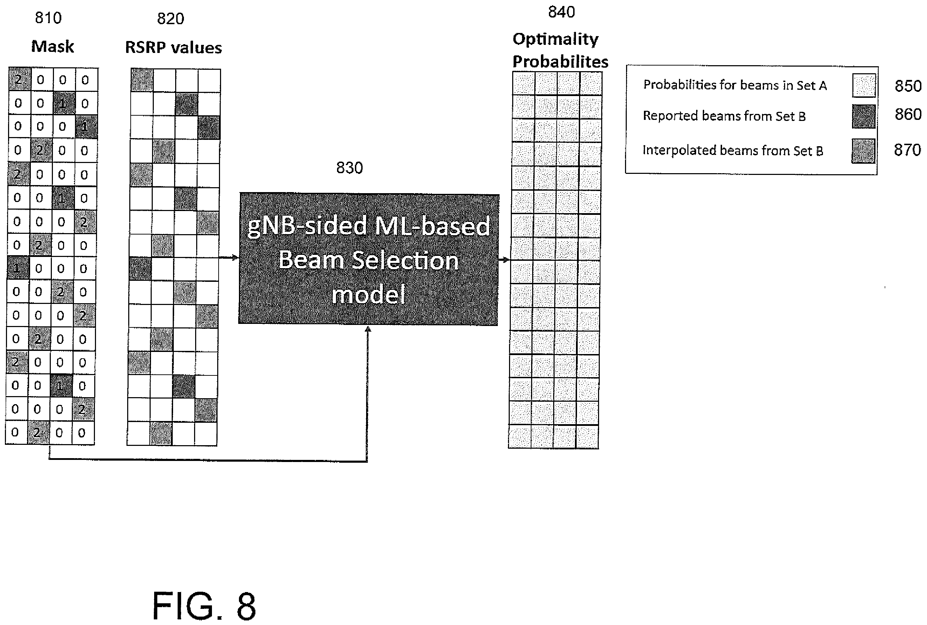

Referring now to FIG. 8, illustrated is an example of beam selection among the beams in Set A using the reported and interpolated RSRPs in Set B. Optionally, a mask matrix may be fed to the ML model to indicate which entries are interpolated. FIG. 8 shows the inputs and outputs of an ML-based beam selection model at the NW, where a mask matrix (810) may also be fed to the ML model (830) as an extra information. In the example of FIG. 8, the RSRP values (820) may be equivalent to the interpolated output RSRP values (730). The mask matrix (810) may not only indicate the entries that are obtained based on the received reports from the UE (860), but also the entries obtained using the interpolation procedure (870). For each beam in Set A (850), the ML model may output the optimality probability (840) as the likelihood of being the optimal (e.g. offering the highest RSRP/SNR).

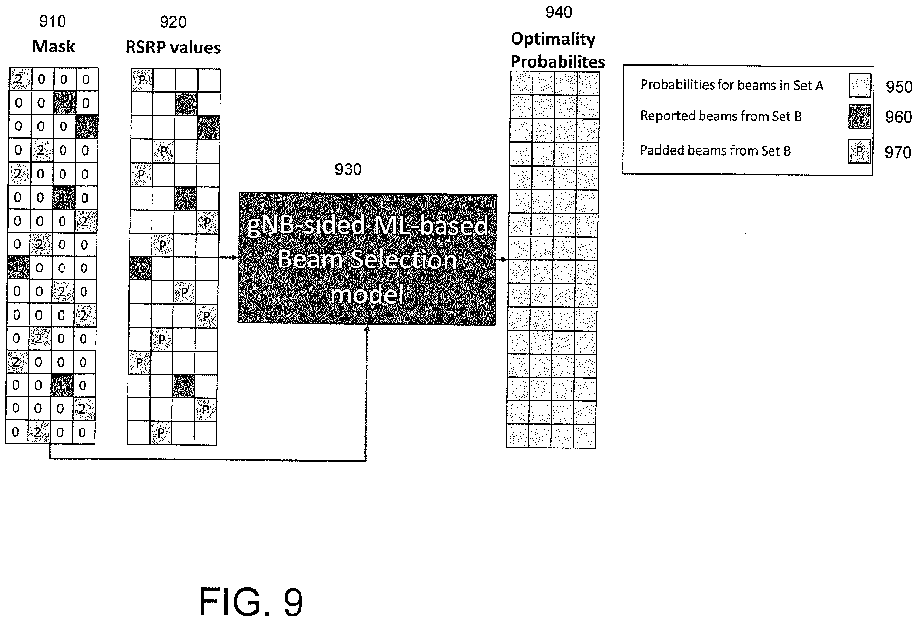

In an alternative example embodiment, the NW may consider padding for processing the received incomplete report from the UE. The NW may consider different paddings (e.g., zero-padding, random padding, constant-padding, etc.) to fill the missing entries in the input matrix to the ML-based beam prediction model. Referring now to FIG. 9, illustrated is an example in which the NW uses zero padding and corresponding mask matrix (910) to indicate unreported beams in Set B. As shown in FIG. 9, the missing RSRPs (970) of the filtered out beams in Set B may be padded with a padding procedure. Then, the padded matrix (920) and the mask matrix (910) may be fed to the ML model (930). The mask matrix (910) may provide the opportunity that the ML model focuses more on the received beam in Set B (960). In other words, the mask matrix (910) may indicate that the padded entries (970) are just fillers, and the ML model (930) should not rely on the values fed in those entries. For each beam in Set A (950), the ML model (930) may output the optimality probability (940) as the likelihood of being the optimal (e.g. offering the highest RSRP/SNR).

In an example embodiment, the NW-sided ML model may be trained. In order to make the NW-sided beam selection model robust to missing RSRP values in Set B, similar situations may need to be available in the training dataset. For the data collection, the NW may ask the UE to report the measured RSRP for all beams in Set B. Then, according to the selected implementation option for MRS by the gNB, the gNB may create several samples from each report from the UE. For example, in case of H-RSRP, the NW may filter out the less important beams using different TH. In this way, the ML model may be robust to different TH.

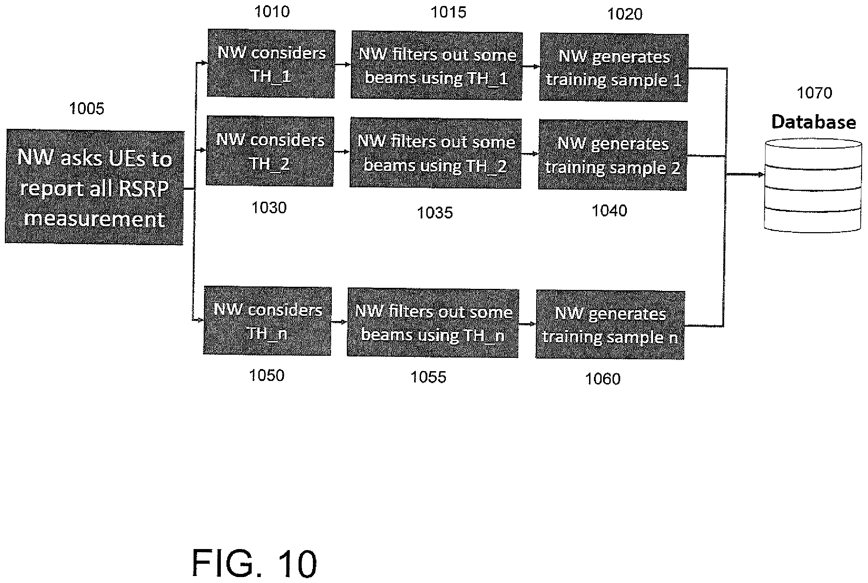

Referring now to FIG. 10, illustrated is an example of data collection for H-RSRP as the selected MRS. At 1005, the NW may ask the UE(s) to report all RSRP measurements. The NW may consider TH_1 (1010). The NW may filter out some beams using TH_1 (1015). The NW may generate training sample 1 (1020), which may be provided to the database (1070). The NW may consider TH_2 (1030) . The NW may filter out some beams using TH_2 (1035). The NW may generate training sample 2 (1040), which may be provided to the database (1070). The NW may consider TH_n (1050) . The NW may filter out some beams using TH_n (1055). The NW may generate training sample n (1060), which may be provided to the database (1070). Similar data collection procedures may be considered for other MRS schemes.

While the example of FIG. 10 results in the generation of training sample 1, training sample 2, and training sample n, this is not limiting; any number of training samples may be generated.

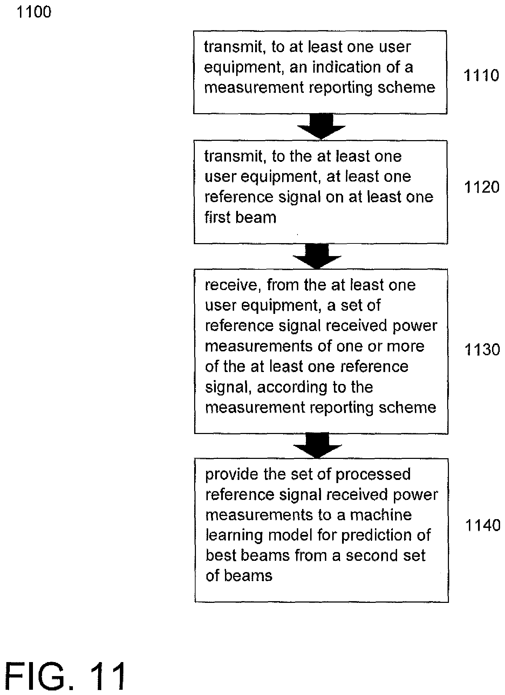

FIG. 11 illustrates the potential steps of an example method 1100. The example method 1100 may include: transmitting, to at least one user equipment, an indication of a measurement reporting scheme, 1110; transmitting, to the at least one user equipment, at least one reference signal on at least one first beam, 1120; receiving, from the at least one user equipment, a set of reference signal received power measurements of one or more of the at least one reference signal, according to the measurement reporting scheme, 1130; and providing the set of processed reference signal received power measurements to a machine learning model for prediction of best beams from a second set of beams, 1140. The example method 1100 may be performed, for example, with a base station, a network node, a network entity, a gNB, an eNB, etc.

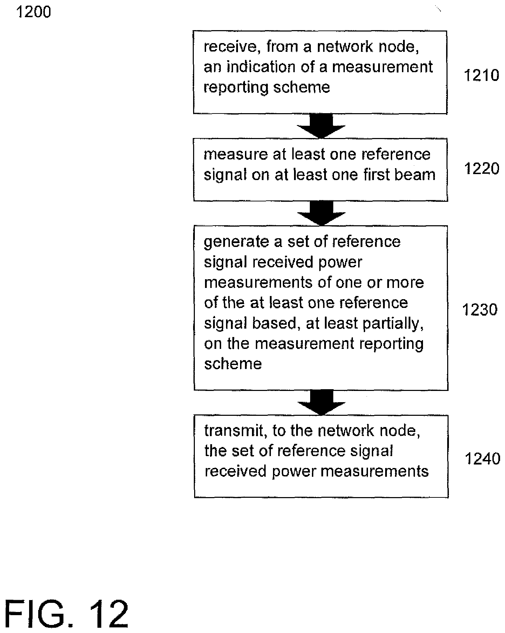

FIG. 12 illustrates the potential steps of an example method 1200. The example method 1200 may include: receiving, from a network node, an indication of a measurement reporting scheme, 1210; measuring at least one reference signal on at least one first beam, 1220; generating a set of reference signal received power measurements of one or more of the at least one reference signal based, at least partially, on the measurement reporting scheme, 1230; and transmitting, to the network node, the set of reference signal received power measurements, 1240. The example method 1200 may be performed, for example, with a UE.

In accordance with one example embodiment, an apparatus may comprise: at least one processor; and at least one memory storing instructions that, when executed by the at least one processor, cause the apparatus at least to: transmit, to at least one user equipment, an indication of a measurement reporting scheme; transmit, to the at least one user equipment, at least one reference signal on at least one first beam; receive, from the at least one user equipment, a set of reference signal received power measurements of one or more of the at least one reference signal, according to the measurement reporting scheme; and providing the set of reference signal received power measurements to a machine learning model for prediction of best beams from a second set of beams.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

Providing the set of reference signal received power measurements to the machine learning model may comprise the example apparatus being further configured to: process the set of reference signal received power measurements; and provide the set of processed reference signal received power measurements to the machine learning model.

Processing the set of reference signal received power measurements may comprise the example apparatus being further configured to: estimate, via interpolation, one or more additional reference signal received power values for beams, of the at least one first beam, for which a measurement is missing from the set of reference signal received power measurements.

Processing the set of reference signal received power measurements may comprise the example apparatus being further configured to: add padding to the set of reference signal received power measurements for beams, of the at least one first beam, for which a measurement is missing from the set of reference signal received power measurements.

The example apparatus may be further configured to: provide a mask matrix to the machine learning model that is configured to indicate values of the set of processed reference signal received power measurements associated with the beams for which the measurement is missing from the set of reference signal received power measurements.

The second set of beams may comprise one of: downlink transmission beams, or downlink transmission beams and downlink reception beams.

In accordance with one aspect, an example method may be provided comprising: transmitting, with a network node to at least one user equipment, an indication of a measurement reporting scheme; transmitting, to the at least one user equipment, at least one reference signal on at least one first beam; receiving, from the at least one user equipment, a set of reference signal received power measurements of one or more of the at least one reference signal, according to the measurement reporting scheme; and providing the set of reference signal received power measurements to a machine learning model for prediction of best beams from a second set of beams.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

The providing of the set of reference signal received power measurements to the machine learning model may comprise: processing the set of reference signal received power measurements; and providing the set of processed reference signal received power measurements to the machine learning model.

The processing of the set of reference signal received power measurements may comprise: estimating, via interpolation, one or more additional reference signal received power values for beams, of the at least one first beam, for which a measurement is missing from the set of reference signal received power measurements.

The processing of the set of reference signal received power measurements may comprise: adding padding to the set of reference signal received power measurements for beams, of the at least one first beam, for which a measurement is missing from the set of reference signal received power measurements.

The example method may further comprise: providing a mask matrix to the machine learning model that is configured to indicate values of the set of processed reference signal received power measurements associated with the beams for which the measurement is missing from the set of reference signal received power measurements.

The second set of beams may comprise one of: downlink transmission beams, or downlink transmission beams and downlink reception beams.

In accordance with one example embodiment, an apparatus may comprise: circuitry configured to perform: transmitting, to at least one user equipment, an indication of a measurement reporting scheme; circuitry configured to perform: transmitting, to the at least one user equipment, at least one reference signal on at least one first beam; circuitry configured to perform: receiving, from the at least one user equipment, a set of reference signal received power measurements of one or more of the at least one reference signal, according to the measurement reporting scheme; and circuitry configured to perform: providing the set of reference signal received power measurements to a machine learning model for prediction of best beams from a second set of beams.

In accordance with one example embodiment, an apparatus may comprise: processing circuitry; memory circuitry including computer program code, the memory circuitry and the computer program code configured to, with the processing circuitry, enable the apparatus to: transmit, to at least one user equipment, an indication of a measurement reporting scheme; transmit, to the at least one user equipment, at least one reference signal on at least one first beam; receive, from the at least one user equipment, a set of reference signal received power measurements of one or more of the at least one reference signal, according to the measurement reporting scheme; and providing the set of reference signal received power measurements to a machine learning model for prediction of best beams from a second set of beams.

As used in this application, the term "circuitry" may refer to one or more or all of the following: (a) hardware-only circuit implementations (such as implementations in only analog and/or digital circuitry) and (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions) and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

In accordance with one example embodiment, an apparatus may comprise means for: transmitting, to at least one user equipment, an indication of a measurement reporting scheme; transmitting, to the at least one user equipment, at least one reference signal on at least one first beam; receiving, from the at least one user equipment, a set of reference signal received power measurements of one or more of the at least one reference signal, according to the measurement reporting scheme; and providing the set of reference signal received power measurements to a machine learning model for prediction of best beams from a second set of beams.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

The means configured for providing the set of reference signal received power measurements to the machine learning model may comprise means configured for: processing the set of reference signal received power measurements; and providing the set of processed reference signal received power measurements to the machine learning model.

The means configured for processing the set of reference signal received power measurements may comprise means configured for: estimating, via interpolation, one or more additional reference signal received power values for beams, of the at least one first beam, for which a measurement is missing from the set of reference signal received power measurements.

The means configured for processing the set of reference signal received power measurements may comprise means configured for: adding padding to the set of reference signal received power measurements for beams, of the at least one first beam, for which a measurement is missing from the set of reference signal received power measurements.

The means may be further configured for: providing a mask matrix to the machine learning model that is configured to indicate values of the set of processed reference signal received power measurements associated with the beams for which the measurement is missing from the set of reference signal received power measurements.

The second set of beams may comprise one of: downlink transmission beams, or downlink transmission beams and downlink reception beams.

A processor, memory, and/or example algorithms (which may be encoded as instructions, program, or code) may be provided as example means for providing or causing performance of operation.

In accordance with one example embodiment, a non-transitory computer-readable medium comprising instructions stored thereon which, when executed with at least one processor, cause the at least one processor to: cause transmitting, to at least one user equipment, of an indication of a measurement reporting scheme; cause transmitting, to the at least one user equipment, of at least one reference signal on at least one first beam; cause receiving, from the at least one user equipment, of a set of reference signal received power measurements of one or more of the at least one reference signal, according to the measurement reporting scheme; and cause providing of the set of reference signal received power measurements to a machine learning model for prediction of best beams from a second set of beams.

In accordance with one example embodiment, a non-transitory computer-readable medium comprising program instructions stored thereon for performing at least the following: causing transmitting, to at least one user equipment, of an indication of a measurement reporting scheme; causing transmitting, to the at least one user equipment, of at least one reference signal on at least one first beam; causing receiving, from the at least one user equipment, of a set of reference signal received power measurements of one or more of the at least one reference signal, according to the measurement reporting scheme; and causing providing of the set of reference signal received power measurements to a machine learning model for prediction of best beams from a second set of beams.

In accordance with another example embodiment, a non-transitory program storage device readable by a machine may be provided, tangibly embodying instructions executable by the machine for performing operations, the operations comprising: causing transmitting, to at least one user equipment, of an indication of a measurement reporting scheme; causing transmitting, to the at least one user equipment, of at least one reference signal on at least one first beam; causing receiving, from the at least one user equipment, of a set of reference signal received power measurements of one or more of the at least one reference signal, according to the measurement reporting scheme; and causing providing of the set of reference signal received power measurements to a machine learning model for prediction of best beams from a second set of beams.

In accordance with another example embodiment, a non-transitory computer-readable medium comprising instructions that, when executed by an apparatus, cause the apparatus to perform at least the following: causing transmitting, to at least one user equipment, of an indication of a measurement reporting scheme; causing transmitting, to the at least one user equipment, of at least one reference signal on at least one first beam; causing receiving, from the at least one user equipment, of a set of reference signal received power measurements of one or more of the at least one reference signal, according to the measurement reporting scheme; and causing providing of the set of reference signal received power measurements to a machine learning model for prediction of best beams from a second set of beams.

A computer implemented system comprising: at least one processor and at least one non-transitory memory storing instructions that, when executed by the at least one processor, cause the system at least to perform: causing transmitting, to at least one user equipment, of an indication of a measurement reporting scheme; causing transmitting, to the at least one user equipment, of at least one reference signal on at least one first beam; causing receiving, from the at least one user equipment, of a set of reference signal received power measurements of one or more of the at least one reference signal, according to the measurement reporting scheme; and causing providing of the set of reference signal received power measurements to a machine learning model for prediction of best beams from a second set of beams.

A computer implemented system comprising: means for causing transmitting, to at least one user equipment, of an indication of a measurement reporting scheme; means for causing transmitting, to the at least one user equipment, of at least one reference signal on at least one first beam; means for causing receiving, from the at least one user equipment, of a set of reference signal received power measurements of one or more of the at least one reference signal, according to the measurement reporting scheme; and means for causing providing of the set of reference signal received power measurements to a machine learning model for prediction of best beams from a second set of beams.

In accordance with one example embodiment, an apparatus may comprise: at least one processor; and at least one memory storing instructions that, when executed by the at least one processor, cause the apparatus at least to: receive, from a network node, an indication of a measurement reporting scheme; measure at least one reference signal on at least one first beam; generate a set of reference signal received power measurements of one or more of the at least one reference signal based, at least partially, on the measurement reporting scheme; and transmit, to the network node, the set of reference signal received power measurements.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

In accordance with one aspect, an example method may be provided comprising: receiving, with a user equipment from a network node, an indication of a measurement reporting scheme; measuring at least one reference signal on at least one first beam; generating a set of reference signal received power measurements of one or more of the at least one reference signal based, at least partially, on the measurement reporting scheme; and transmitting, to the network node, the set of reference signal received power measurements.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

In accordance with one example embodiment, an apparatus may comprise: circuitry configured to perform: receiving, from a network node, an indication of a measurement reporting scheme; circuitry configured to perform: measuring at least one reference signal on at least one first beam; circuitry configured to perform: generating a set of reference signal received power measurements of one or more of the at least one reference signal based, at least partially, on the measurement reporting scheme; and circuitry configured to perform: transmitting, to the network node, the set of reference signal received power measurements.

In accordance with one example embodiment, an apparatus may comprise: processing circuitry; memory circuitry including computer program code, the memory circuitry and the computer program code configured to, with the processing circuitry, enable the apparatus to: receive, from a network node, an indication of a measurement reporting scheme; measure at least one reference signal on at least one first beam; generate a set of reference signal received power measurements of one or more of the at least one reference signal based, at least partially, on the measurement reporting scheme; and transmit, to the network node, the set of reference signal received power measurements.

In accordance with one example embodiment, an apparatus may comprise means for: receiving, from a network node, an indication of a measurement reporting scheme; measuring at least one reference signal on at least one first beam; generating a set of reference signal received power measurements of one or more of the at least one reference signal based, at least partially, on the measurement reporting scheme; and transmitting, to the network node, the set of reference signal received power measurements.

The measurement reporting scheme may comprise a scheme for reporting reference signal received power measurements of beams that are above a preconfigured threshold value.

The measurement reporting scheme may comprise a scheme for reporting a predetermined number of highest reference signal received power measurements of beams.

The measurement reporting scheme may comprise a scheme for reporting reference signal received power measurements of beams that cover a predetermined percentage of the total received power measured from a plurality of beams.

The set of reference signal received power measurements may exclude a measurement for one or more of the at least one first beam.

In accordance with one example embodiment, a non-transitory computer-readable medium comprising instructions stored thereon which, when executed with at least one processor, cause the at least one processor to: cause receiving, from a network node, of an indication of a measurement reporting scheme; measure at least one reference signal on at least one first beam; generate a set of reference signal received power measurements of one or more of the at least one reference signal based, at least partially, on the measurement reporting scheme; and cause transmitting, to the network node, of the set of reference signal received power measurements.

In accordance with one example embodiment, a non-transitory computer-readable medium comprising program instructions stored thereon for performing at least the following: causing receiving, from a network node, of an indication of a measurement reporting scheme; measuring at least one reference signal on at least one first beam; generating a set of reference signal received power measurements of one or more of the at least one reference signal based, at least partially, on the measurement reporting scheme; and causing transmitting, to the network node, of the set of reference signal received power measurements.

In accordance with another example embodiment, a non-transitory program storage device readable by a machine may be provided, tangibly embodying instructions executable by the machine for performing operations, the operations comprising: causing receiving, from a network node, of an indication of a measurement reporting scheme; measuring at least one reference signal on at least one first beam; generating a set of reference signal received power measurements of one or more of the at least one reference signal based, at least partially, on the measurement reporting scheme; and causing transmitting, to the network node, of the set of reference signal received power measurements.

In accordance with another example embodiment, a non-transitory computer-readable medium comprising instructions that, when executed by an apparatus, cause the apparatus to perform at least the following: causing receiving, from a network node, of an indication of a measurement reporting scheme; measuring at least one reference signal on at least one first beam; generating a set of reference signal received power measurements of one or more of the at least one reference signal based, at least partially, on the measurement reporting scheme; and causing transmitting, to the network node, of the set of reference signal received power measurements.

A computer implemented system comprising: at least one processor and at least one non-transitory memory storing instructions that, when executed by the at least one processor, cause the system at least to perform: causing receiving, from a network node, of an indication of a measurement reporting scheme; measuring at least one reference signal on at least one first beam; generating a set of reference signal received power measurements of one or more of the at least one reference signal based, at least partially, on the measurement reporting scheme; and causing transmitting, to the network node, of the set of reference signal received power measurements.

A computer implemented system comprising: means for causing receiving, from a network node, of an indication of a measurement reporting scheme; means for measuring at least one reference signal on at least one first beam; means for generating a set of reference signal received power measurements of one or more of the at least one reference signal based, at least partially, on the measurement reporting scheme; and means for causing transmitting, to the network node, of the set of reference signal received power measurements.

The term "non-transitory," as used herein, is a limitation of the medium itself (i.e. tangible, not a signal) as opposed to a limitation on data storage persistency (e.g., RAM vs. ROM).

It should be understood that the foregoing description is only illustrative. Various alternatives and modifications can be devised by those skilled in the art. For example, features recited in the various dependent claims could be combined with each other in any suitable combination(s). In addition, features from different embodiments described above could be selectively combined into a new embodiment. Accordingly, the description is intended to embrace all such alternatives, modification and variances which fall within the scope of the appended claims.

## Claims

1. An apparatus comprising means for:
transmitting, to at least one user equipment, an indication of a measurement reporting scheme;
transmitting, to the at least one user equipment, at least one reference signal on at least one first beam;
receiving, from the at least one user equipment, a set of reference signal received power measurements of one or more of the at least one reference signal, according to the measurement reporting scheme; and
providing the set of reference signal received power measurements to a machine learning model for prediction of best beams from a second set of beams.

2. The apparatus of claim 1, wherein the measurement reporting scheme comprises a scheme for reporting reference signal received power measurements of beams that are above a preconfigured threshold value.

3. The apparatus of claim 1, wherein the measurement reporting scheme comprises a scheme for reporting a predetermined number of highest reference signal received power measurements of beams.

4. The apparatus of claim 1, wherein the measurement reporting scheme comprises a scheme for reporting reference signal received power measurements of beams that cover a predetermined percentage of the total received power measured from a plurality of beams.

5. The apparatus of any of claims 1 through 4, wherein the set of reference signal received power measurements excludes a measurement for one or more of the at least one first beam.

6. The apparatus of any of claims 1 through 5, wherein the means configured for providing the set of reference signal received power measurements to the machine learning model comprises means configured for:
processing the set of reference signal received power measurements; and
providing the set of processed reference signal received power measurements to the machine learning model.

7. The apparatus of claim 6, wherein the means configured for processing the set of reference signal received power measurements comprises means configured for:
estimating, via interpolation, one or more additional reference signal received power values for beams, of the at least one first beam, for which a measurement is missing from the set of reference signal received power measurements.

8. The apparatus of claim 6, wherein the means configured for processing the set of reference signal received power measurements comprises means configured for:
adding padding to the set of reference signal received power measurements for beams, of the at least one first beam, for which a measurement is missing from the set of reference signal received power measurements.

9. The apparatus of claim 7 or 8, wherein the means are further configured for:
providing a mask matrix to the machine learning model that is configured to indicate values of the set of processed reference signal received power measurements associated with the beams for which the measurement is missing from the set of reference signal received power measurements.

10. The apparatus of any of claims 1 through 9, wherein the second set of beams comprises one of:
downlink transmission beams, or
downlink transmission beams and downlink reception beams.

11. An apparatus comprising means for:
receiving, from a network node, an indication of a measurement reporting scheme;
measuring at least one reference signal on at least one first beam;
generating a set of reference signal received power measurements of one or more of the at least one reference signal based, at least partially, on the measurement reporting scheme; and
transmitting, to the network node, the set of reference signal received power measurements.

12. The apparatus of claim 11, wherein the measurement reporting scheme comprises a scheme for reporting reference signal received power measurements of beams that are above a preconfigured threshold value.

13. The apparatus of claim 11, wherein the measurement reporting scheme comprises a scheme for reporting a predetermined number of highest reference signal received power measurements of beams.

14. A method comprising:
transmitting, with a network node to at least one user equipment, an indication of a measurement reporting scheme;
transmitting, to the at least one user equipment, at least one reference signal on at least one first beam;
receiving, from the at least one user equipment, a set of reference signal received power measurements of one or more of the at least one reference signal, according to the measurement reporting scheme; and
providing the set of reference signal received power measurements to a machine learning model for prediction of best beams from a second set of beams.

15. A method comprising:
receiving, with a user equipment from a network node, an indication of a measurement reporting scheme;
measuring at least one reference signal on at least one first beam;
generating a set of reference signal received power measurements of one or more of the at least one reference signal based, at least partially, on the measurement reporting scheme; and
transmitting, to the network node, the set of reference signal received power measurements.
